# EUROPEAN PATENT APPLICATION

(11) **EP 4 365 562 A1**
(43) Date of publication of application: **08.05.2024**
(21) Application number: 22832220.2
(22) Date of filing: 01.07.2022
(51) Int. Cl.: G01J 5/08, G01J 5/10, G01J 5/34, G02B 3/00

(54) **PASSIVE OPTICAL DETECTOR**

(30) Priority: 02.07.2021 CN 202110753242
(71) Applicant: Hangzhou Hikvision Digital Technology Co., Ltd., Hangzhou, Zhejiang 310051 (CN)
(72) Inventor: LI, Xuanjiao, Hangzhou, Zhejiang 310051 (CN); XU, Haidong, Hangzhou, Zhejiang 310051 (CN); HE, Shaohua, Hangzhou, Zhejiang 310051 (CN); LIN, Weiwei, Hangzhou, Zhejiang 310051 (CN)
(74) Representative: Epping - Hermann - Fischer
(86) International application number: PCT/CN2022/103362
(87) International publication number: WO 2023/274408

(57) **Abstract**

A passive optical detector, relating to the technical field of optical detection, and comprising a housing, and a lens array (110), a detection unit, and a reflective component (130) which are provided in the housing. The lens array (110) comprises a plurality of optical lenses, and the detection unit comprises a photoelectric sensor (120). The plurality of optical lenses are arranged into a convex arc-shaped structure, and a convex surface of the convex arc-shaped structure protrudes in a direction away from the photoelectric sensor (120); the photoelectric sensor (120) is located on a focal plane of the convex arc-shaped structure. The reflective component (130) is provided on the inner side of the convex surface of the lens array (110), and is close to a first edge region at a first end (111) of the lens array (110). The lens array (110) having the convex arc-shaped structure is used in combination with the photoelectric sensor (120), so that a detection distance and a detection field angle of the passive optical detector can be ensured, and the applicability and the detection effect of the passive optical detector are improved.

## Description

The present application claims the priority to a Chinese Patent Application No. 202110753242.8, filed with China National Intellectual Property Administration on July 02, 2021 and entitled "Passive Optical Detector", which is incorporated herein by reference in its entirety.

### Technical Field

The present application relates to the technical field of optical detection, and in particular to a passive optical detector.

### Background

Passive Infrared detector (PIR) is a widely used security detection device that detects the infrared radiation emitted by a human body moving through a view zone of the PIR, which is also called as a defense zone.

One current PIR consists of a single lens, a passive infrared sensor, and a related circuit, which leads to a small detection field angle, and thereby is difficult to meet the needs of practical applications. In another current PIR, by combining a reflecting prism with a Fresnel lens, the detection field angle of 180° is achieved, since the reflecting prism can reflect light that was otherwise undetectable by the passive infrared sensor. However, since the reflecting prism in this PIR needs to be arranged directly in front of the passive infrared sensor, and obstructs the passage of a lot of light transmitted through the Fresnel lens, the detection distance of the optical detector is significantly shortened, which is unable to meet the needs of practical applications.

### Summary

Embodiments of the present application provide a passive optical detector, which can overcome the problem in expanding the detection field angle while ensuring the detection distance of the optical detector.

To solve the above technical problem, the embodiments of the present application utilize the following technical solutions.

The embodiments of the present application provides a passive optical detector including a housing, and a lens array, a detection unit, and a reflective component which are provided in the housing;
the lens array includes a plurality of optical lenses, and the detection unit includes a photoelectric sensor; the plurality of optical lenses are arranged into a convex arc-shaped structure, and a convex surface of the convex arc-shaped structure protrudes in a direction away from the photoelectric sensor; the photoelectric sensor is located on a focal plane of the convex arc-shaped structure;
the reflective component is provided on the inner side of the convex surface of the lens array, and is close to one end of the lens array.

In the passive optical detector provided in the embodiments of the present application, the lens array includes a plurality of optical lenses, and the detection unit includes a photoelectric sensor; the plurality of optical lenses are arranged into a convex arc-shaped structure, and the convex surface of the convex arc-shaped structure protrudes in a direction away from the photoelectric sensor; the photoelectric sensor is located on the focal plane of the convex arc-shaped structure; the reflective component is provided on the inner side of the convex surface of the lens array, and is close to the first edge region at one end of the lens array. It follows that this technical solution applies the lens array with the convex arc-shaped structure, the reflective component, and an obstructing assembly. Compared to traditional passive optical detectors, the lens array with the convex arc-shaped structure can achieve a defense zone of a longer distance and receive light radiations within a larger angle in the defense zone. Therefore, by combining the lens array with the convex arc-shaped structure with the photoelectric sensor, the detection distance and detection field angle of the passive optical detector can be ensured. Moreover, by combining the reflective component with the lens array, the detection field angle of the passive optical detector can be further expanded. By combining the obstructing assembly with the lens array, the detection field angle can be adjusted, greatly improving the applicability and detection effect of the passive optical detector. In addition, the passive optical detector can support a plurality of installation postures, which can meet the personalized detection needs of different scenarios compared to passive optical detectors that only support one installation posture in the market. Further, there is no need to design the internal structure of the passive optical detector separately for different installation postures, thereby saving design costs.

### Brief Description of the Drawings

In order to describe the technical solutions of embodiments of the present application or of the prior art more clearly, a simple introduction of the drawings required in the description of the embodiments and of the prior art will be given. Obviously, the drawings described below are just for some embodiments of the present application and other drawings can be obtained by those of ordinary skills in the art based on these drawings without any creative effort.
Fig. 1 is a schematic structural view of a passive optical detector provided in an embodiment of the present application;
Fig. 2 is a schematic structural view of a passive optical detector provided in another embodiment of the present application;
Fig. 3(a) is a schematic view of the light transmission between a reflective component and a planar lens provided in an embodiment of the present application;
Fig. 3(b) is another schematic view of the light transmission between a reflective component and a planar lens provided in an embodiment of the present application;
Fig. 4 is a schematic structural view of a passive optical detector provided in another embodiment of the present application;
Fig. 5 is a schematic view of a defense zone of a passive optical detector provided in an embodiment of the present application;
Fig. 6 is a schematic structural view of a passive optical detector provided in another embodiment of the present application;
Fig. 7 is a schematic view of a defense zone of a passive optical detector provided in another embodiment of the present application.

### Detailed Description

In order to make the objects, technical solutions and advantages more clearly, the present application will be further described in detail below with reference to the appended drawings and embodiments. Obviously, the described embodiments are only some embodiments of the present application, and not all of them. Based on the embodiments of the present application, all other embodiments obtained by those of ordinary skills in the art without any creative effort fall within the scope of protection of the present invention.

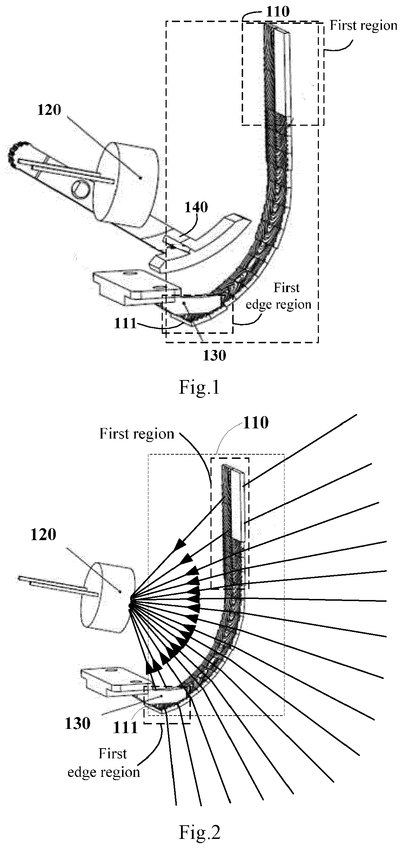

Fig. 1 is a schematic structural view of a passive optical detector provided in an embodiment of the present application. Fig. 1 only exemplarily illustrates various components of the passive optical detector. In one embodiment, as shown in Fig. 1, the passive optical detector includes a housing, and a lens array 110, a detection unit and a reflective component 130 which are provided in the housing.

The lens array 110 includes a plurality of optical lenses, and the detection unit includes a photoelectric sensor 120. The plurality of optical lenses are arranged into a convex arc-shaped structure, and a convex surface of the convex arc-shaped structure protrudes in a direction away from the photoelectric sensor 120. The photoelectric sensor 120 is located on the focal plane of the convex arc-shaped structure.

The reflective component 130 is provided on the inner side of the convex surface of the lens array 110 and is close to one end of the lens array 110.

In another embodiment, as shown in Fig. 1, the passive optical detector includes a housing, and a lens array 110, a detection unit, a reflective component 130, and an obstructing assembly 140 which are provided in the housing.

The lens array 110 includes a plurality of optical lenses, and the detection unit includes a photoelectric sensor 120. The plurality of optical lenses are arranged into a convex arc-shaped structure, and a convex surface of the convex arc-shaped structure protrudes in a direction away from the photoelectric sensor 120. The photoelectric sensor 120 is located on the focal plane of the convex arc-shaped structure.

The reflective component 130 is provided on the inner side of the convex surface of the lens array 110 and is close to one end of the lens array 110.

The obstructing assembly 140 is provided on the inner side of the convex surface of the lens array 110 to obstruct at least one optical lens. That is, the obstructing assembly 140 is provided on the inner side of the convex surface of the lens array 110, on an optical path along which the light transmitted through the lens array 110 travels to the photoelectric sensor 120. In this way, when the obstructing assembly 140 is arranged at different positions, the obstructing assembly can obstruct the passage of the light transmitted through the optical lenses corresponding to the different positions.

It should be noted that the detection unit also includes a circuit structure such as a control circuit, a detection circuit connected to the photoelectric sensor 120. Fig. 1 only exemplarily shows the photoelectric sensor 120. In addition, the housing is not shown in Fig. 1. Fig. 1 only exemplarily shows a relative position between the lens array 110 and the photoelectric sensor 120 when installed in a wall-installed posture. It should be understood that when installed in a ceiling-installed posture, the passive optical detector shown in Fig. 1 can be rotated clockwise by an angle before installation, and this angle can be determined according to specific application scenario requirements.

The number of optical lenses and the shape and size of each optical lens shown in Fig. 1 are only exemplary. Under the premise of the convex arc-shaped structure, the number of optical lenses and the shape and size of each optical lens can be configured according to specific application scenarios, which are not limited in any embodiment of the present description. For example, in one application scenario, the lens array 110 can be composed of 16 optical lenses with different shapes and sizes arranged into a convex arc-shaped structure similar to a L-shape, to achieve a passive optical detector with the detection field angle of 120°. For another example, in another application scenario, the lens array 110 can be composed of 12 optical lenses with the same shape and different sizes arranged into a convex arc-shaped structure similar to a L-shape, to achieve a passive optical detector with the detection field angle of 140°. As shown in Fig. 2, the angle between the top incident light and the bottom incident light is the detection field angle of the passive optical detector.

In the embodiment, the area of a surface of the photoelectric sensor 120 for detecting light is greater than or equal to the focal plane area of the convex arc-shaped structure, so that the light directed by each optical lens to the passive optical detector can be detected by the photoelectric sensor 120, effectively ensuring the detection sensitivity of the passive optical detector and achieving a passive optical detector with a larger detection field angle. The photoelectric sensor 120 can be a passive infrared sensor, such as a pyroelectric infrared sensor. Correspondingly, the passive optical detector provided in the embodiments of the present application can be a passive infrared detector, which detects the defense zone according to the infrared radiation in the defense zone. It should be understood that photoelectric sensor 120 can also be other types of passive photoelectric sensors. Correspondingly, the passive optical detector provided in the embodiments of the present application can be other types of passive optical detectors which achieve the detection of the defense zone according to other types of light (such as natural light, ultraviolet light, etc.) emitted in the defense zone, which will not be listed in the embodiments of the present application.

In this embodiment, the optical lens can be a converging lens. The focal length of each optical lens is different, but the size of each optical lens can be the same or different. By arranging all optical lenses in sequence with a common symmetry axis in the extension direction of the lens array 110, it can be ensured that the focus of each optical lens converges to the same point or a smaller surface, thus facilitating the setting of the photoelectric sensor 120. The direction of the symmetry axis is the same as the extension direction of the lens array 110, and for example can be the longitudinal centerline of the L-shaped convex arc-shaped structure shown in Fig. 1.

In this embodiment, the number of optical lenses included in a first edge region shown in Fig. 1, the position of the obstructing assembly 140, and the number of optical lenses obstructed by the obstructing assembly 140 are only exemplarily shown and do not constitute a limitation on the present application. The position of the obstructing assembly 140 can be adjusted according to the specific installation posture, and will be explained in detail in subsequent embodiments, which will not be repeated here.

The passive optical detector provided in the embodiment of the present application includes: a lens array consisting of a plurality of optical lenses, a detection unit including a photoelectric sensor, wherein the plurality of optical lenses are arranged into a convex arc-shaped structure, and the convex surface of the convex arc-shaped structure protrudes in a direction away from the photoelectric sensor, and the photoelectric sensor is located on the focal plane of the convex arc-shaped structure. The reflective component is provided on the inner side of the convex surface of the lens array and is close to the first edge region at the first end of the lens array, while the obstructing assembly is provided on the inner side of the convex surface of the lens array to obstruct at least one optical lens. It can be seen that this technical solution applies a lens array with a convex arc-shaped structure, a reflective component, and an obstructing assembly. Compared to traditional passive optical detectors, the lens array with a convex arc-shaped structure can achieve a longer distance defense zone and receive light radiations within a larger angle in the defense zone. Therefore, by combining a lens array with a convex arc-shaped structure with a photoelectric sensor, the detection distance and the detection field angle of the passive optical detector can be ensured. Moreover, by combining the reflective component with the lens array, the detection field angle of the passive optical detector can be further expanded. By combining the obstructing assembly with the lens array, the detection field angle can be adjusted, greatly improving the applicability and detection effect of the passive optical detector. In addition, the passive optical detector can support a plurality of installation postures, which can meet the personalized detection needs of different scenarios compared to passive optical detectors that only support one installation posture in the market. Further, there is no need to design the internal structure of the passive optical detector separately for different installation postures, thereby saving design costs.

In one embodiment, as shown in Fig. 2, the propagation direction of light in the passive optical detector is exemplarily shown, and the obstructing assembly 140 is not shown in Fig. 2. The central axis of each optical lens intersects at the focus of the convex arc-shaped structure. That is, the focus of each optical lens is consistent with the focus of the convex arc-shaped structure, and the focuses of the respective optical lenses intersect on a receiving surface of the passive optical detector. This design not only facilitates the determination of the position of the photoelectric sensor 120 in the passive optical detector, but also enables the light directed by each optical lens to the passive optical detector to be detected by the photoelectric sensor 120, effectively ensuring the detection sensitivity of the passive optical detector.

In this embodiment, as shown in Fig. 1, the reflective component 130 can be provided on the inner side of the convex surface of the lens array 110 and is close to the first end 111 of the lens array 110. It can also be arranged to be close to the second end of the lens array 110, wherein the first end and second end are the two ends of the lens array 110, respectively. In one embodiment, the reflective component 130 is configured to obstruct the optical lens of the first edge region of the first end 111 of the lens array 110.

That is, the position of the reflective component 130 shares the field of view with the optical lens in the first edge region at the first end 111 of the lens array 110. In order to ensure the detection ability on the first edge region at the first end 111 of the lens array 110, the width of the reflective component 130 is smaller than the width of the lens array 110. For example, the width of the reflective component 130 can be half the width of the lens array 110, etc. In this way, light can still be directed into the photoelectric sensor 120 from the optical lens in the first edge region at the first end 111 of the lens array 110 which is not obstructed by the reflective component 130, ensuring the detection field angle.

In one embodiment, as shown in Figs. 1 and 2, the optical lenses in the first region of the lens array 110 are composed of a first-type lens and a second-type lens that are joined together, wherein the blank area represents the second-type lens and the shaded area represents the first-type lens. It should be understood that the number of optical lenses, the area of the first-type lens, and the area of the second-type lens contained in the first region of Figs. 1 and 2 are only exemplarily shown and do not constitute a limitation on the present application. In addition to the first region marked in Figs. 1-2, according to specific application scenario requirements and product form requirements, the first region can also be located at other positions on the lens array 110, such as a certain position at the same end as the first edge region, a certain position in the middle part of the lens array 110, and so on.

In one embodiment, the light entering the optical lens in the second edge region at the second end of the lens array 110 is directed to the reflective component 130 and then to the photoelectric sensor 120. The second-type lens is configured to direct the light entering the second-type lens to the reflective component 130. That is, the reflective component 130 is located on the inner side of the first edge region, and the second-type lens directs the light entering the second-type lens to the reflective component 130, which is then directed to the photoelectric sensor 120.

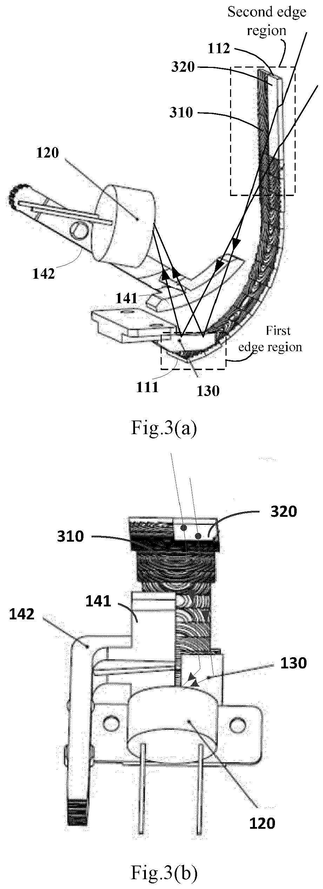

As shown in Fig. 3(a), which is a schematic view of the light transmission between the reflective component 130 and the second-type lens in a view from one angle. Fig. 3(b) is a schematic view of the light transmission between the reflective component 130 and the second-type lens in a view from another angle. The arrows in Figs. 3(a) and 3(b) point to the propagation direction of light between the reflective component 130, the second-type lens, and the photoelectric sensor 120. The area of the second-type lens in Fig. 3, as well as the area of the optical lenses obstructed by the reflective component 130, are only exemplarily shown and do not constitute a limitation on the present application. The area of the second-type lenses, as well as the area of the optical lenses obstructed by the reflective component 130, can be determined based on specific application scenario requirements.

In one embodiment, as shown in Fig. 3(a), the first region (not marked in Fig. 3(a)) mentioned above is the second edge region close to the second end 112 of the lens array 110. The optical lenses in the lens array 110, in a region other than the second edge region, are first-type lenses. The first-type lenses can be Fresnel lenses, and the second-type lens can be a planar lens.

In Figs. 3(a) and 3(b), the optical lenses in the shaded area 310 are Fresnel lenses, while the optical lens in the blank area 320 is a planar lens. It should be understood that the area of the planar lens and the area of the Fresnel lenses in Figs. 3(a) and 3(b) are only exemplarily shown and do not constitute a limitation on the present application. the planar lens can be a parallel flat plate or other dielectric plate that can make the incident light parallel to the outgoing light.

The light entering the second-type lens can be directed to the reflective component 130, which can reflect the light to the photoelectric sensor 120, so that the photoelectric sensor 120 can detect this part of the light. Due to the larger angle range of the light that can be directed by the second-type lens to the reflective component 130 compared to the light that enters the photoelectric sensor 120 through a first-type lens if the first-type lens is disposed at the position of the second-type lens, the combination of the second-type lens and the reflective component 130 can achieve the expansion of the detection field angle, thereby enabling far-field detection, and expanding the detection field angle while ensuring the detection distance of the optical detector.

In order to ensure that the light entering the second-type lens can be directed to the reflective component 130, the curvature of each part of the lens array (i.e., the convex arc-shaped structure) can be not exactly the same. For example, there may be a portion with a larger curvature and a portion with a smaller curvature.

In one embodiment, the curvature of the convex arc-shaped structure in the first edge region at the first end 111 of the lens array is greater than the curvature of the convex arc-shaped structure in the second edge region at the second end 112 of the lens array. For example, as shown in Fig. 3(a), the structure formed by the optical lens in the second edge region at the second end 112 of the lens array can be closer to a linear structure, and the curvature of the structure formed by the optical lens in the first edge region at the first end 111 of the lens array can be larger, thus ensuring that the light transmitted from the second-type lens can be directed to the reflective component 130, Thus, the reflective component 130 can further reflect light to the photoelectric sensor 120. Moreover, it can be ensured that the photoelectric sensor 120 is located on the focal plane of the first-type lens of the lens array, so that the light reflected by the reflective component 130 can be detected, as well as the light directly transmitted from each first-type lens, achieving the expansion of the detection field angle.

In the second edge region close to the second end 112 of the lens array 110, the areas of the Fresnel lens and the planar lens that make up the optical lenses can be the same or different. When the areas of the Fresnel lens and the planar lens that make up the optical lenses are the same, the energy of the light reflected by the reflective component 130 to the photoelectric sensor 120 is equal to the energy of the light directed by the Fresnel lens to the photoelectric sensor 120 in the second edge region; when the area of the Fresnel lens that constitutes the optical lenses is smaller than the area of the planar lens, the energy of the light reflected by the reflective component 130 to the photoelectric sensor 120 is greater than the energy of the light directed by the Fresnel lens to the photoelectric sensor 120 in the second edge region; when the area of the Fresnel lens that constitutes the optical lenses is greater than the area of the planar lens, the energy of the light reflected by the reflective component 130 to the photoelectric sensor 120 is less than the energy of the light directed by the Fresnel lens to the photoelectric sensor 120 in the second edge region.

Therefore, the areas of the Fresnel lens and planar lens that make up the optical lenses can be arranged based on the detection sensitivity of the photoelectric sensor 120. For example, for a photoelectric sensor 120 that requires the energy of light directed by half an optical lens to achieve detection and alarm, the Fresnel lens and planar lens that have the same area can be configured to form the optical lenses in the second edge region. At this time, the size of the reflective component 130 can be the same as that of the planar lens, to ensure that the energy of the light directed by the optical lenses in the first edge region at the first end 111 of the lens array 110, which are not obstructed by the reflective component 130, to the photoelectric sensor 120 can trigger the detection and alarm of the photoelectric sensor 120, thereby ensuring the consistent detection sensitivities for both ends of the lens array 110. Half an optical lens refers to a Fresnel lens with a width of half the width of the lens array 110 and a length of a preset length.

For another example, for a photoelectric sensor 120 that requires the energy of light directed by a quarter of an optical lens to achieve detection and alarm, it is possible to arbitrarily arrange a Fresnel lens and a planar lens with the same or different areas to form the optical lenses in the second edge region, as long as it is ensured that the area of the Fresnel lens is at least one fourth of that of the optical lens and that the area of the planar lens is at least one fourth of that of the optical lens. In this case, the principle of setting the size of the reflective component 130 can be to ensure that the size of the optical lens not obstructed by the reflective component 130 is one fourth of the optical lens, so as to ensure that the energy of the light directed by the optical lens in the first edge region at the first end 111 of the lens array 110, which are not obstructed by the reflective component 130, to the photoelectric sensor 120 can trigger the detection and alarm of the photoelectric sensor 120, which ensures consistent detection sensitivities for both ends of the lens array 110. The quarter of an optical lens refers to a Fresnel lens with a width of one quarter of the width of the lens array 110 and a length of a preset length.

In one embodiment, the Fresnel lens includes a smooth surface and a threaded surface, with the smooth surface located on the outer side of the convex surface of the lens array 110 and the threaded surface located on the inner side of the convex surface of the lens array 110. In this embodiment, the smooth surface of the Fresnel lens is on the outer side of the convex surface of the lens array, and the threaded surface is on the inner side of the convex surface of the lens array, so all light entering the smooth surface of the Fresnel lens can converge to the focus of the Fresnel lens through the threaded surface, that is, to the focal plane of the convex arc-shaped structure.

In one embodiment, the reflective component 130 may be a parabolic mirror. The specific shape of the reflective component 130 can be determined comprehensively based on the position of the planar lens and the position of the reflective component 130. That is, the angle of light that the reflective component 130 needs to receive is determined based on the position of the planar lens and the position of the reflective component 130, thereby determining the specific shape of the reflective component 130. Optionally, the reflective component 130 is a free curved mirror.

In one embodiment, the reflective component can be provided close to the first edge region at one end of the lens array. The optical lenses in the first region of the lens array are composed of a first-type lens and a second-type lens that are joined together, wherein the first region is a second edge region close to one end of the lens array, and the second edge region and the first edge region are located at the same end of the lens array. Specifically, the reflective component can be located on the inner side of the first edge region, and the second-type lens directs the light entering the second-type lens to the reflective component, which is then directed to the photoelectric sensor to expand the detection field angle.

That is, the second-type lens mentioned above can also be arranged at the same end of the lens array as the reflective component, as long as the second-type lens can direct light entering the second-type lens to the reflective component, which is then directed to the photoelectric sensor. In this way, in some cases, such as when the detection field angle of the photoelectric sensor itself is small, the detection field angle of the passive optical detector can be effectively expanded.

For example, the second-type lens mentioned above can be located at one end where the first region of the lens array is located as shown in Fig. 1, together with the reflective component. The reflective component can be closer to the edge of the lens array, and the second-type lens can be closer to the center of the lens array. In this way, the light emitted from outside to the second-type lens can be directed by the second-type lens to the reflective component, which then directs the light to the photoelectric sensor for detection.

Of course, the second-type lens mentioned above can also be arranged at one end where the first edge region of the lens array is located as shown in Fig. 1, together with the reflective component. In this case, the reflective component can be closer to the edge of the lens array, and the second-type lens can be closer to the center of the lens array. In this way, the light emitted from outside to the second-type lens can be directed by the second-type lens to the reflective component, which then directs the light to the photoelectric sensor for detection.

The specific arrangements of the second-type lens and reflective component can be determined based on the transmission angle and reflection angle of the light, as long as it can be ensured that the light entering the second-type lens can be directed to the reflective component by the second-type lens and then to the photoelectric sensor, which is not specifically limited here.

In one embodiment, the obstructing assembly 140 is a movable obstructing assembly, as shown in 3(a). The movable obstructing assembly includes an obstructing sheet 141 and a toggle handle 142 that are fixedly connected. The obstructing sheet 141 is arranged on the inner side of the convex surface of the lens array 110, one end of the toggle handle 142 is fixedly connected to the obstructing sheet 141, and the other end of the toggle handle 142 is rotatably connected to the housing (not shown in Fig. 3(a)). The obstructing sheet 141 obstructs the optical lenses at different positions under the action of the toggle handle 142.

In one embodiment, the obstructing sheet 141 may be an arc-shaped obstructing sheet, and the convex surface of the arc-shaped obstructing sheet has a protrusion direction same as that of the lens array 110, as shown in Fig. 3(a). The arc-shaped obstructing sheet can be arranged close to the photoelectric sensor 120. In this embodiment, the obstructing sheet 141 is designed in an arc shape and is arranged close to the photoelectric sensor 120, so that the obstructing sheet 141 with a small area projection obstructs the passage of light in a large field of view, simplifying the internal structure of the product. Moreover, the position of the obstructing sheet can be changed by the movement of the obstructing sheet, achieving the switching of the position of the obstructing sheet when installing in the wall-installed posture and the ceiling-installed posture, to adapt to the different positions required for the wall-installed and ceiling-installed postures, the operation is simple, greatly improving the user experience.

In one embodiment, the movable positions of the toggle handle 142 include a first position and a second position. When the toggle handle 142 is moved to the first position, the obstructing sheet 141 obstructs a target region between the second end 112 of the lens array 110 and a first optical lens. The first optical lens can be an optical lens arranged in a first posture, and the target region includes a second edge region close to the second end 112 of the lens array 110.

That is, when the toggle handle 142 is moved to the first position, the obstructing sheet 141 can obstruct the passage of the light transmitted through the first optical lens included in the second edge region at the second end 112 of the lens array 110.

The second edge region in this embodiment is the same area as the second edge region in the passive optical detector shown in Figs. 3(a) and 3(b) in the above embodiments. In this embodiment, the first posture can be a posture parallel to the wall, and the wall is a wall used for installing the passive optical detector. In other words, when the passive optical detector is installed in a wall-installed posture, the first optical lens can be an optical lens disposed in a posture parallel to the wall. The first posture can also be a posture at an angle to the wall, and the angle of the light directed by the optical lens disposed at an angle to the wall to the photoelectric sensor 120 is greater than a preset threshold. When installed in the wall-installed posture, due to the installation of lighting fixtures, smoke alarms, and other objects that are prone to flickering on the ceiling, the preset threshold can be set as an angle of such as 85° and 90° to avoid interference of objects on the ceiling to the photoelectric sensor 120, thereby avoiding frequent false alarms of the passive optical detector and improving its detection reliability.

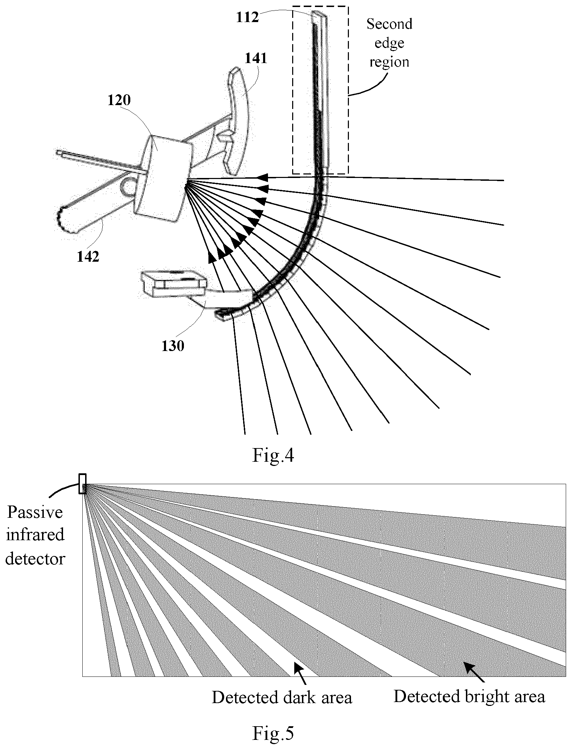

As shown in Fig. 4, when the first posture is a posture parallel to the wall, the second edge region at the second end 112 of the lens array 110 is close to the ceiling. Therefore, the light emitted by objects prone to flicker such as lamps and smoke alarms installed on the ceiling will radiate to the first optical lens included in the second edge region, which may cause false alarms of the passive optical detector. Therefore, in this case, the toggle handle 142 can be moved to the first position, so that the obstructing sheet 141 can obstruct the passage of the light transmitted through the first optical lens included in the second edge region at the second end 112 of the lens array 110, thereby shielding it from the light emitted by objects that are prone to flicker such as lamps and smoke alarms installed on the ceiling, and ensuring the detection reliability of the passive optical detector.

In this embodiment, when the toggle handle 142 is moved to the second position and the reflective component 130 obstructs an optical lens in the first edge region, the obstructing sheet 141 obstructs an optical lens in the first edge region which is not obstructed by the reflective component 130. In order to avoid the obstructing sheet 141 from obstructing the reflective component 130, as shown in Fig. 3(b), when the toggle handle 142 is moved to the second position, there is no overlapping area between the obstructing sheet 141 and the reflective component 130. For example, the width of the reflective component 130 and the width of the obstructing sheet 141 can both be half the width of the lens array, but when the toggle handle 142 is moved to the second position, there is no overlapping area between these two parts. That is, the reflective component 130 and the obstructing sheet 141 each obstruct half of the first edge region, which not only does not affect the effect of the reflective component 130 in expanding the field angle, but also obstructs the light entering the first edge region, ensuring the detection reliability of the passive optical detector.

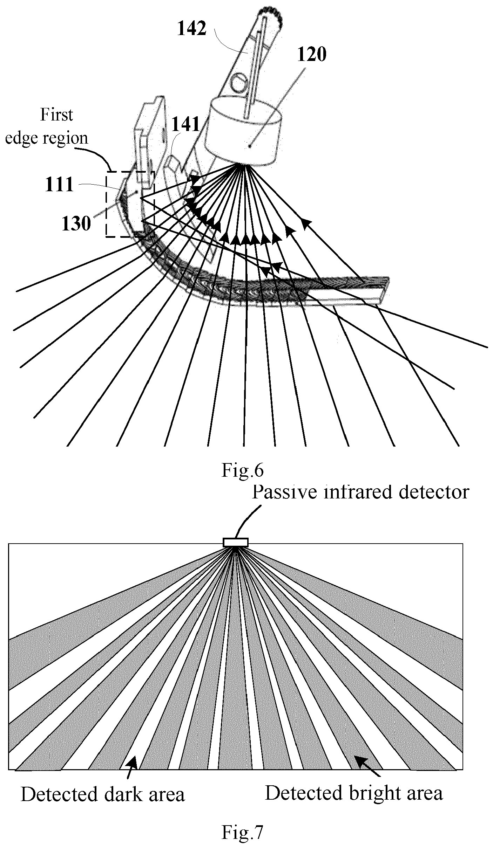

As shown in Fig. 6, when the second posture is a ceiling-installed posture, the first edge region at the first end 111 of the lens array 110 can receive light from the glass on the wall, which may lead to false alarms of the passive optical detector. Therefore, in this case, the toggle handle 142 can be moved to the second position, so that the obstructing sheet 141 can obstruct the passage of the light transmitted through the optical lens in the first edge region which is not obstructed by the reflective component 130, thereby shielding it from the light from the glass on the wall and ensuring the detection reliability of the passive optical detector.

Meanwhile, when the second posture is the ceiling-installed posture and there is a person walking on the ground, as shown in Fig. 6, due to the asymmetric structure of the lens array 110 relative to the center of the passive optical detector, if the optical lens in the first edge region which is not obstructed by the reflective component 130 is not obstructed, the first end 111 of the lens array 110 can generally detect the person's head, and the second end 112 of the lens array 110 can generally only detect the person's portions below the human chest, which will result in a significant difference in energy detected by both ends of the lens array 110. Therefore, by obstructing the optical lens in the first edge region which is not obstructed by the reflective component 130, the problem of a significant difference in the energy of the light directed by the first edge region to the photoelectric sensor 120 and the energy of the light directed by the second edge region close to the second end 112 of the lens array 110 to the photoelectric sensor 120 is effectively avoided, thereby avoiding the problem that the passive optical detector has the first end 111 of the lens array 110 that is too sensitive in detection and the second end 112 that is insensitive in detection, and improving the detection reliability of the passive optical detector.

According to the embodiments described in Figs. 1 to 3(b), by combining the reflective component 130 with the lens array 110 and setting the reflective component 130 close to the first edge region at the first end 111 of the lens array 110, as well as various optical lenses in the second edge region at the second end 112 of the lens array 110 formed by Fresnel lenses and planar lenses that are joined together, due to the fact that the angle of the light directed by the planar lens to the photoelectric sensor 120 is greater than that of the light directed by the Fresnel lens to the photoelectric sensor 120 at the same position, the effect of expanding the detection field angle of the second end 112 of the lens array 110 is achieved. Meanwhile, the reflective component 130 does not completely obstruct the first edge region at the first end 111 of the lens array 110, but retains a portion of the optical lens to ensure that light can transmitted from the first edge region to the photoelectric sensor 120. Therefore, the combination of the reflective component 130 with a planar lens achieves a passive optical detector with a larger detection field angle.

In the passive optical detector shown in Figs. 1 to 3(b), several different orientations of the visual axis of the photoelectric sensor 120 are listed: if the visual axis of the photoelectric sensor 120 is oriented at 45° to the bottom right, it can achieve the detection requirement with a symmetrical field angle of 45° when installed in the wall-installed posture, and can also consider the detection requirement with an asymmetric field angle when installed in the ceiling-installed posture. If the orientation of the visual axis of the photoelectric sensor 120 is horizontally to the right, it can meet the detection requirements with an asymmetric field angle when installed in the wall-installed posture, and can also meet the detection requirements with a symmetrical field angle of 90° when installed in the ceiling-installed posture. If the visual axis of the photoelectric sensor 120 is oriented at other angles, such as 30° to the bottom right, 10° to the top right, etc., it can meet the detection requirements with an asymmetric field angle when installed in the wall-installed posture, and can also meet the detection requirements with an asymmetric field angle when installed in the ceiling-installed posture. According to specific application scenarios, the visual axis of the photoelectric sensor 120 can be oriented to meet the needs of specific application scenarios.

Fig. 4 is a schematic structural view of a passive optical detector provided in another embodiment of the present application. As shown in Fig. 4, when the passive optical detector is installed in a first posture, the toggle handle 142 is moved to the first position, wherein the obstructing sheet 141 obstructs the target region between the second end 112 of the lens array 110 (not marked in Fig. 4) and the first optical lens.

The first posture can be a wall-installed posture. When the passive optical detector is installed in the wall-installed posture, it can be installed completely in contact with the wall (or other surfaces on which the passive optical detector is to be installed in the wall-installed posture) or installed at an angle to the wall. The specific angle can be selected according to the specific application scenario requirements. The photoelectric sensor 120 shown in Fig. 4 is a pyroelectric infrared sensor. When the passive optical detector is a passive infrared detector, the passive infrared detector can achieve the requirement of the detection field angle of 90° when installed in the wall-installed posture, and can meet the requirements of the EN G3 international standard for human body detection and alarm for the passive infrared detector.

Fig. 5 is a schematic view of a defense zone of a passive optical detector provided in an embodiment of the present application. Fig. 5 is the schematic view of the defense zone corresponding to Fig. 4. The passive optical detector shown in Fig. 4 achieves the division of the bright and dark areas of the defense zone when installed in the wall-installed posture. The gray area represents the detection bright area, and the white area represents the detection dark area.

Fig. 6 is a schematic structural view of a passive optical detector provided in another embodiment of the present application. As shown in Fig. 6, when the passive optical detector is installed in a second posture, the toggle handle 142 is moved to the second position. If the reflective component 130 obstructs the optical lens in the first edge region, the obstructing sheet 141 obstructs the optical lens in the first edge region which is not obstructed by the reflective component 130.

Due to the ability of the obstructing sheet 141 to obstruct the passage of light in a large field of view through small area projection, the size of the obstructing sheet 141 can be the same or different from the size of the obstructed optical lens. Fig. 6 is an exemplary representation of the effect of obstructing the optical lens in the first edge region which is not obstructed by the reflective component 130 when the area of the obstructing sheet 141 is larger than the obstructed optical lens. This does not constitute a limitation on the present application.

The second posture can be the ceiling-installed posture. When the passive optical detector is installed in the ceiling-installed posture, it can be installed completely in contact with the ceiling (or other surfaces on which the passive optical detector is to be mounted in a ceiling-installed posture) or at an angle to the ceiling. The specific angle can be selected according to the specific application scenario requirements.

Fig. 7 is a schematic view of a defense zone of a passive optical detector provided in another embodiment of the present application. Fig. 7 is the schematic view of the defense zone corresponding to Fig. 6. The passive optical detector shown in Fig. 6 achieves the division of the bright and dark areas of the defense zone when installed in the ceiling-installed posture. The gray area represents the detection bright area, and the white area represents the detection dark area.

It should also be noted that the terms "include", "comprise", or any other variation thereof are intended to cover non-exclusive inclusion, so that a process, method, commodity, or equipment that includes a series of elements not only includes those elements, but also other elements that are not explicitly listed, or also include elements inherent in such a process, method, commodity, or equipment. Without further limitations, the elements limited by the statement "including one..." do not exclude the existence of other identical elements in the process, method, commodity, or equipment that includes the said elements.

The above is only a preferred embodiment of the present invention and is not intended to limit the present invention. Any modifications, equivalent substitutions, improvements, etc. made within the spirit and principles of the present invention should be included within the scope of protection of the present invention.

## Claims

1. A passive optical detector, wherein the passive optical detector comprises a housing, and a lens array, a detection unit, and a reflective component which are provided in the housing;
the lens array comprises a plurality of optical lenses, and the detection unit comprises a photoelectric sensor; the plurality of optical lenses are arranged into a convex arc-shaped structure, and a convex surface of the convex arc-shaped structure protrudes in a direction away from the photoelectric sensor; the photoelectric sensor is located on a focal plane of the convex arc-shaped structure;
the reflective component is provided on an inner side of the convex surface of the lens array, and is close to one end of the lens array.

2. The passive optical detector as claimed in claim 1, wherein, the passive optical detector further comprises an obstructing assembly;
the obstructing assembly is provided on the inner side of the convex surface of the lens array, on an optical path along which light transmitted through the lens array travels to the photoelectric sensor.

3. The passive optical detector as claimed in claim 1, wherein, the reflective component is provided close to a first edge region at a first end of the lens array, and the optical lenses in a first region of the lens array are composed of a first-type lens and a second-type lens that are joined together, wherein the first region is a second edge region close to a second end of the lens array.

4. The passive optical detector as claimed in claim 3, wherein, the reflective component is provided on an inner side of the first edge region, and the second-type lens directs light entering the second-type lens to the reflective component, which is then directed to the photoelectric sensor.

5. The passive optical detector as claimed in claim 3, wherein, optical lenses in the lens array, in a region other than the second edge region, are first-type lenses;
the first-type lenses are Fresnel lenses; and the second-type lens is a planar lens.

6. The passive optical detector as claimed in claim 5, wherein, each of the Fresnel lenses comprises a smooth surface and a threaded surface; the smooth surface is located on an outer side of the convex surface of the lens array, and the threaded surface is located on the inner side of the convex surface of the lens array.

7. The passive optical detector as claimed in claim 1, wherein, the reflective component is provided close to a first edge region at one end of the lens array, and the optical lenses in a first region of the lens array are composed of a first-type lens and a second-type lens that are joined together, wherein the first region is a second edge region close to one end of the lens array, and the second edge region and the first edge region are located at the same end of the lens array.

8. The passive optical detector as claimed in claim 7, wherein, the reflective component is provided on an inner side of the first edge region, and the second-type lens directs light entering the second-type lens to the reflective component, which is then directed to the photoelectric sensor.

9. The passive optical detector as claimed in claim 1, wherein, the obstructing assembly is a movable obstructing assembly, which comprises an obstructing sheet and a toggle handle that are fixedly connected; the obstructing sheet is provided on the inner side of the convex surface of the lens array; one end of the toggle handle is fixedly connected to the obstructing sheet, and the other end of the toggle handle is rotatably connected to the housing;
the obstructing sheet obstructs optical lenses at different positions under an action of the toggle handle.

10. The passive optical detector as claimed in claim 9, wherein, the obstructing sheet is an arc-shaped obstructing sheet, and a convex surface of the arc-shaped obstructing sheet has a protrusion direction same as that of the lens array.

11. The passive optical detector as claimed in claim 9, wherein, movable positions of the toggle handle comprise a first position and a second position;
when the toggle handle is moved to the first position, the obstructing sheet obstructs a target region between a second end of the lens array and a first optical lens; the first optical lens is an optical lens arranged in a first posture; the target region comprises a second edge region close to the second end of the lens array;
when the toggle handle is moved to the second position and the reflective component obstructs an optical lens in the first edge region, the obstructing sheet obstructs an optical lens in the first edge region which is not obstructed by the reflective component.

12. The passive optical detector as claimed in claim 11, wherein, when the passive optical detector is installed in the first posture, the toggle handle is moved to the first position.

13. The passive optical detector as claimed in claim 11, wherein, when the passive optical detector is installed in a second posture, the toggle handle is moved to the second position.

14. The passive optical detector as claimed in claim 1, wherein, focuses of the respective optical lenses intersect on a receiving surface of the passive optical detector.

15. The passive optical detector as claimed in claim 1, wherein, the reflective component is a parabolic mirror.

16. The passive optical detector as claimed in any one of claims 1 to 15, wherein, a curvature of each part of the lens array is not exactly the same.

17. The passive optical detector as claimed in any one of claims 3 to 6, wherein, a curvature of the convex arc-shaped structure in the first edge region at the first end of the lens array is greater than a curvature of the convex arc-shaped structure in the second edge region at the second end of the lens array.
